# EUROPEAN PATENT SPECIFICATION

(11) **EP 3 880 988 B1**
(45) Date of publication and mention of the grant of the patent: **08.03.2023**
(21) Application number: 19805548.5
(22) Date of filing: 05.11.2019
(51) Int. Cl.: F16H 3/00, B25F 3/00, B25F 5/00

(54) **POWER TOOL AND GEAR UNIT FOR SUCH A POWER TOOL**
WERKZEUGMASCHINE UND GETRIEBEEINHEIT FÜR EINE SOLCHE WERKZEUGMASCHINE
OUTIL À MOTEUR ET UNITÉ D'ENGRENAGES POUR UN TEL OUTIL À MOTEUR

(30) Priority: 12.11.2018 SE 1830327
(43) Date of publication of application: 22.09.2021
(73) Proprietor: Atlas Copco Industrial Technique AB, 105 23 Stockholm (SE)
(72) Inventor: HALLBERG, Daniel Ingvar, 172 66 Sundbyberg (SE); RINGDAHL, Patrik Clas Wilhelm, 181 31 Lidingö (SE)
(86) International application number: PCT/EP2019/080205
(87) International publication number: WO 2020/099178

(56) References cited:
- GB-A- 2 109 489

## Description

### Technical field

The present invention generally relates to handheld power tools, more particularly to a handheld power tool and a gear unit for such a power tool.

### Technical Background

Power tools for example for drilling or for tightening of nuts and bolts are known to be used in various industries. Commonly, the type of tool including the size and effect of the motor has to be chosen based on the requirements and conditions most likely to prevail for the particular use for which the tool in question is intended to be use, i.e. the conditions during which the tool will be used most of the time.

In certain applications however, the working conditions and/or the requirement on the expected output tend to vary a lot during use for example with regards to the speed and/or torque required during different parts of a typical working operation causing numerous design challenges.

For example, for nutrunners there may be a need to provide a very wide speed range to be able to provide a high rotational speed during rundown and on the other hand a high torque in the end of the tightening, i.e. during the actual tightening of the joint. For drilling machines, a similar need for a wide speed range may also prevail, but for such tools this may be mainly due to a need for different speeds depending on the material in which the drilling takes place where materials such as aluminum and carbon fiber require a high drilling speed (high speed, low torque) whereas material such as titanium require a much lower speed (low speed, high torque). This may be or particular importance for applications where drillings is performed in structures comprising several layers of different materials where the same tool is used in a multistage drilling operation.

Power tools subjected to these types of requirements are however known to, in order to be able to provide these different/varying speeds and torque levels, include for example one or several planetary gear steps connected in series. However a major disadvantage of such conventional gear boxes is that they force the motor to run at different speed levels during tightening in order to provide the desired behavior. This is a major disadvantage for example in a tool where an electric motor is used, even if such a motor can run at differences speed it has an ideal operating point where losses are at their lowest. Hence, forcing the motor to run at other, less optimal, rotational speed lever, creates unnecessary losses and thus reduces the efficiency of the tool.

In order to alleviate some of these problems, attempts have been made to use reversing motors where the force flow through the gear unit, and hence possibly the gear ratio provided, depends on the direction of rotation of the motor. In such a motor, two gear ratios and hence two speed levels may be provided while the motor operates at the same rotational speed, preferably the ideal speed mentioned above.

GB2109489 discloses a power drive which is particularly for a power tool, comprising a reversible motor, an epicyclic gear box and a drive member rotatable by the motor through the gear box where the speed of the drive member can be changed simply by reversing the direction of the motor.

However, there are many problems associated with such gear arrangements remaining. For example due to the high number of components typically used to provide this functionality, such gear units, or gear boxes, tend to be space consuming and in particularly add to the length of the tool. Further, in order to ensure a proper functionality, such gear units tend to require the use of multiple bearings. This, apart from adding to the space requirement mentioned above, also brings an unnecessary high level of complexity to the design. Hence, there exists a need for improvement in the field of power tools comprising such gear arrangements.

### Summary of the invention

Accordingly, it would be desirable to provide a power tool comprising such a gear unit having a particularly compact and reliable design. In particular, it would be desirable to provide such a power tool providing higher efficiency (i.e. lower losses) where the active length of the motor may be kept as short as possible. To better address one or more of these concerns a gear unit as defined in independent claim 1 is provided Claim 13 concerns a handheld power tool comprising a gear unit as defined in independent claim 1.

Preferred embodiments are defined in the dependent claims. According to a first aspect of the invention a handheld power tool comprising a motor, an output shaft and a gear unit arranged between the output shaft and a drive shaft connected to the motor is provided. Wherein the gear unit comprises a gear input shaft adapted to engage the drive shaft (i.e. be driven by motor), a gear output shaft adapted to engage the output shaft and a gear unit subassembly comprising a sun gear arranged on and co-rotating with the input shaft, an outer element comprising an internal ring gear, at least one planet gear arranged between the sun gear and the internal ring gear, and adapted to transfer rotational movement there between, and a planet carrier. Wherein the gear unit further comprises a first freewheel clutch mechanism and a second freewheel clutch mechanism, each adapted to selectively transfer torque to the gear output shaft, wherein the first freewheel clutch mechanism is arranged to selectively provide a first torque transferring connection between the gear input shaft and the gear output shaft bypassing the gear unit subassembly, wherein the second freewheel clutch mechanism is arranged to selectively provide a second torque transferring connection between the drive shaft and the gear output shaft via the gear unit subassembly, and wherein said first freewheel clutch mechanism provides said first torque transferring connection when said drive shaft rotates in a first direction and wherein said second freewheel clutch mechanism provides said second torque transferring connection when said drive shaft rotates in a second, opposite direction.

According to the first aspect, the power tool provides a solution to the concerns described above by means of a design incorporating a gear unit selectively providing a connection between the drive axel of the motor and the output axle either bypassing or via a planetary gear mechanism depending on the direction of rotation of the motor and hence the drive axle.

More particularly, the gear unit design incorporates a first and second freewheel clutch mechanism which allows for the force flow, i.e. the path along which the torque is transferred, to be redirected depending on the direction of rotation of the motor. In the context of the present specification the term "freewheel clutch mechanism" in a broad sense refers to a mechanism which transfers torque in one direction of rotation and idles (i.e. freewheels) in the other direction of rotation. Other terms denoting this type of mechanism and which may be used interchangeably with the term "freewheel clutch mechanism" throughout the present specification include freewheel, freewheel clutch and unidirectional or one-way coupling/clutch. The first and second freewheel clutch mechanism may in some embodiments be chosen and arranged such that the direction of rotation in which torque is transferred (and hence the rotation in which they idle) is the same for both mechanisms.

In other words, the torque transferring connection, or force flow, provided by the gear unit is different depending on the direction of rotation of the motor. The direction of rotation of the output shaft however remains the same regardless of the direction of rotation of the motor. This design cleverly provides not only a convenient provision a higher speed range, for example in one exemplary embodiment a two speed ratio may be provided providing a first ratio for example for run down and second ratio for the tightening phase but also the power losses in the tool may be reduced and hence efficiency improved. This is because the motor of tool may be allowed to operate at, or at least near, the optimal point mentioned in the background section of the present specification.

For example, in an exemplary embodiment utilizing an electric motor, the design is particularly advantageous since the power losses of for example an electric motor are highly dependent on the motor torque and by using the gearbox as a motor torque reducer the rundown speed can be kept as is and the high ratio be utilized to reduce motor torque during the tightening phase. Compared to a one-stage gearbox, where the motor drives the screw at a high load also during the tightening phase incurring high currents in the motor and hence large losses, the second-stage provided by the exemplary embodiment of the invention allows the motor to run at a lower load but a high RPM during the tightening phase relating in low current and hence low losses. Further, given the clever arrangement of the freewheel mechanisms made possible by the invention, an opportunity to shorten the active length of the motor is provided.

Hence, advantages provided by the invention include the provision of a high speed range, significant reduction of power losses in the tool and a compact design.

In general, with regards to the gear unit, the gear input axel and the sun gear (more particularly the sun gear wheel) arranged thereon may together be referred to as a sun gear or a sun gear assembly, in which the sun gear wheel constitutes the element interacting with the one or more planet gears (in some embodiments, the gear unit may comprise two or three planet gears. The sun gear wheel may constitute a separate element arranged on the axle or in some embodiments be formed integral with the axle. For example, cogs constituting the wheel may be machined in the circumferential surface of the axle. Further, the outer element may in some embodiments be a cylindrical (i.e. substantially cylindrical) element, possibly with varying inner- and outer diameters. According to the invention as claimed, the outer element comprises an outer cylindrical surface and on the inside comprises a first cylindrical portion adapted to receive an outer cylindrical surface on the second freewheel clutch mechanism and a second portion constituting the internal ring gear cooperating with the at least one planet gear.

The output shaft (with which the gear output shaft may engage) may also be referred to as a tool output shaft, a spindle and/or as a shaft being adapted to connected to or engage such a spindle. Moreover, the output shaft may in some embodiments comprise means for connection to a suitable socket such as a socket for engaging a nut or bolt or in the case of a drill a chuck or means for receiving or engaging a chuck. In some embodiment, the output shaft is instead adapted to be connected to, or form part of, a further gear. For example, in the exemplary case of an angled tool, the output shaft may be connected to a bevel gear or even in some embodiments form part of the input side of such a bevel gear.

In some embodiments, the tool may further comprise circuitry and/or be connectable to a controller (or control unit) operative to control the power tool. In one embodiment, the power tool is a tool providing a lower tightening torque, for example in the range 1-20 Nm, in some embodiments 1-12 Nm.

According to one embodiment the first freewheel mechanism is arranged to engage the input shaft and the gear output shaft. Hereby an advantageous direct connection may be selectively provided there between and hence a gear ratio of 1:1 may be selectively be achieved, when the drive axle/input shaft rotates in a direction in which the first freewheel clutch mechanism transfers torque.

According to one embodiment, the first freewheel mechanism comprises a cylindrical element comprising a cylindrical outer surface, wherein the outer cylindrical surface is fitted to the output shaft. Hereby, rotational movement may be transferred to the output shaft via the first freewheel. Suitable methods of fitting include a press fit, a shrink fit, an adhesive or similar. According to one embodiment, the first freewheel mechanism further comprises at least one movement transferring element arranged to engage the cylindrical element. More particularly, an inner side of the cylindrical element. Further, the at least one movement transferring element may be adapted to engage, i.e. to bear, against an outer surface of the input axle or shaft. Hereby, a rotating movement of the input shaft may be transferred over the element(s) to the output axle. The transfer is provided only when the direction of rotating is a direction in which torque is transferred over the freewheel. Examples of such elements include rollers, balls, sprags and similar.

According to another embodiment the first freewheel mechanism comprises a first inner cylindrical element and a second outer cylindrical element, wherein the first and second cylindrical element are concentrically arranged the first one inside the second one, wherein the first cylinder is fitted to the output shaft and wherein the inner cylinder is fitted to the input shaft. Hence, the inner cylinder rotates with the drive shaft/input shaft and depending on the direction rotates in a manner transferring torque to the outer cylinder or idles (i.e. rotates without transferring torque). Suitable methods of fitting include a press fit, a shrink fit, an adhesive or similar. Movement transferring elements as described above may be arranged between the cylindrical elements.

According to one embodiment, the second freewheel mechanism is arranged to engage the outer element and the output shaft. Hereby a torque transferring connection may be selectively provided between the drive shaft and the gear output shaft via the planetary gear, and hence a gear ratio differing from 1:1 may be achieved, when the drive axle/input shaft rotates in a direction in which the second freewheel clutch mechanism transfers torque.

According to one embodiment, the second freewheel mechanism comprises a cylindrical element comprising a cylindrical outer surface, wherein the outer cylindrical surface is fitted to the outer element. Hereby, rotational movement may be transferred to the output shaft via the second freewheel. Suitable methods of fitting include a press fit, a shrink fit, an adhesive or similar. According to one embodiment, the second freewheel mechanism further comprises at least one movement transferring element arranged to engage the cylindrical element. More particularly, an inner side of the cylindrical element. Further, the at least one rolling element in such an embodiment may engage, i.e. bear, against an outer surface of the output axle or shaft. Hereby, a rotating movement of the outer element may be transferred over the rolling element(s) to the output axle. The transfer is provided only when the direction of rotating is a direction in which torque is transferred over the second freewheel. Examples of such elements include rollers, balls, sprags and similar.

According to another embodiment, the second freewheel mechanism comprises a first inner cylindrical element and a second outer cylindrical element, wherein the first and second cylindrical element are concentrically arranged the first one inside the second one, and wherein the first cylinder is fitted to the output shaft and wherein the second cylinder is fitted to the element. Hence, the movement of the drive shaft is transferred to the outer cylinder via the sun gear, planetary gear and outer ring gear, and depending on the direction of rotation the outer cylindrical elements rotates either in a manner transferring torque to the inner cylinder (and hence to the gear output shaft) or idles depending on the direction of rotation. Suitable methods of fitting include a press fit, a shrink fit, an adhesive or similar. Movement transferring elements as described above may be arranged between the cylindrical elements.

In some embodiments, the first freewheel clutch mechanism may be adapted to transfer torque to the gear unit output shaft when the motor (i.e. the drive shaft) rotates in a clockwise direction, whereas the second freewheel mechanism may be adapted to transfer torque to the output shaft via the planetary gear as the motor rotates in a counter clockwise direction.

As mentioned above, in some embodiments, at least one of the first and second freewheel mechanism may further comprises at least one movement transferring element. Examples of such elements include rolling elements such as rollers or balls. In a freewheel mechanism comprising such elements, the one-way behaviour may be provided by means of the design of the track which the rollers engage. In other embodiment, so called sprags may be arranged to transfer movement. Sprags are non-revolving elements which slip in one direction of rotation allowing the mechanism to idle but tilt and lock in the other direction so that torque may be transferred. This is known in the art and will not be described in greater detail. According to one embodiment, at least one of the first and second freewheel mechanism is a roller clutch. In other embodiments, at least one of the first and second freewheel clutch mechanism may be an overrunning clutch, a sprag clutch or a ratchet device.

According to one embodiment, the power tool further comprises a housing enclosing at least the motor and the gear unit, and wherein a rotational movement of the planet carrier is fixed with respect to the housing. Hence, as the input shaft and hence the sun wheel arranged thereon, or formed integral with axle, rotates, the at least one planet gear transfers this movement to the ring gear of the outer element which in turn rotates, whereas the carrier remains still, i.e. does not rotate.

According to one embodiment, the gear unit further comprises an outer sleeve, wherein the outer sleeve is fixedly arranged in the housing and wherein a rotational movement of the planet carrier is fixed with respect to the outer sleeve. In one embodiment, the planet carrier comprises ridges or protrusions along an outer periphery, and the outer sleeve comprises corresponding grooves with which the ridges may engage. I.e. what may be referred to as a spline connection. Such an outer sleeve may also be arranged to enclose, or partially enclose, the other components of the gear unit which may also be advantageous from an assembly point of view.

According to one embodiment, the first and second freewheel mechanisms are coaxially arranged. This is advantageous for example in that a more compact design may be achieved.

According to one embodiment, the first and second freewheel are arranged such that at least a partial axial overlap prevails between the first and second freewheel clutch mechanism. In some embodiments, the second freewheel may be arranged enclosing or surrounding the first freewheel clutch mechanism. Or, in other words, the first and second freewheel clutch mechanisms may be concentrically arranged the first one inside the second one. In some embodiments, the first and second freewheel mechanism have the same axial length whereas in other embodiments the first, or inner, freewheel mechanism has a shorter axial length.

A coaxial arrangement of the first and second freewheel mechanism and further the arrangement of one of the freewheel clutch mechanisms inside the other is particularly advantageous not only in order to achieve a compact, space saving design as such given the decrease of the length of the arrangement but further, also in that the need for additional bearings may be reduced or even completely eliminated since the total length of the portion of the gear unit at risk of misalignment is reduced as well. This in turn implies further advantages including a reduction of the complexity and the number of components of the design.

Further, the gear output shaft may in some embodiments, in order to be able to receive the first and/or second freewheel clutch mechanism in a particularly advantageous manner, comprise a portion having a cylindrical shape. More particularly, a portion having the shape of a hollow cylinder having an open end. This cylindrical portion may be arranged at a first end of said gear output shaft. Hereby, the first freewheel clutch mechanism may be arranged on an inside of the hollow cylinder, i.e. facing and/or engaging an inner cylindrical surface of the cylindrical portion (such that an outer cylindrical surface of the first freewheel mechanism faces this inner surface) whereas the second freewheel clutch mechanism may be arranged on an outside of the hollow cylinder, i.e. facing and/or engaging an outer cylindrical surface of the cylindrical portion (such that an outer cylindrical surface of the first freewheel mechanism faces this inner surface). These features together provide a particularly compact and space saving design.

According to one embodiment, the gear ratio of the gear unit, when the drive shaft is rotating in the first direction is 1:1. This may be the case when the drive shaft rotates in the direction in which the first freewheel mechanism transfers torque and hence when a direct connection is provided between the drive shaft/input and the gear output shaft.

According to one embodiment, the gear ratio when the drive shaft is rotating in the second direction differs from 1:1. This may be the case when the drive shaft rotates in the direction in which the first freewheel mechanism idles and the second freewheel mechanism is brought to transfer torque and hence when a connection is provided between the drive shaft/input and the gear output shaft via the planetary gear. The exact gear ratio provided may off course be adapted depending on the application. In one exemplary embodiment, the gear ratio provided is 1:5.

According to one embodiment, the motor is a reversing motor. In one embodiment, the motor is a reversing electric motor. Further, a tool comprising an air motor is also conceivable within the scope of the present invention.

According to one embodiment, the power tool is a power tool chosen from the group comprising a screw driver, a nut runner, a drill and a grinder. The skilled person however realizes that any other type of power tools is conceivable within the scope of the present invention. For example, the skilled person realizes that only slight modification of the structure would be required for use with a stationary or fixturized tools. In some embodiment, the power tool may be a battery powered tool. The increased efficiency of the tool provided by means of the inventive gear unit is off course of particular importance to a battery powered tool where longer battery life may be achieved.

Objectives, advantages and features of the gear unit conceivable within the scope of the second aspect of the invention are readily understood by the foregoing discussion referring to the first aspect of the invention.

According to yet another aspect of the present invention a system comprising a power tool according to any of the exemplary embodiment listed above and a control unit operative to control the power tool is provided.

Further objectives of, features of and advantages of the present invention will become apparent when studying the following detailed disclosure, the drawings and the appended claims. Those skilled in the art realize that different features of the present invention can be combined to create embodiments other than those described in the following.

### Brief description of the drawings

The invention will be described in the following illustrative and non-limiting detailed description of exemplary embodiments, with reference to the appended drawing, on which
Figure 1a is a cross sectional view of an exemplary power tool according to one embodiment.
Figure 2a is a cross sectional view of an exemplary gear unit of a power tool according to one embodiment.
Figure 2b is a cross sectional view along section B-B of the exemplary gear unit shown in fig. 2a.
Figure 2c is a cross sectional view along section C-C of the exemplary gear unit shown in fig. 2a.

All figures are schematic, not necessarily to scale and generally only show parts which are necessary in order to elucidate the invention, wherein other parts may be omitted or merely suggested.

### Detailed description

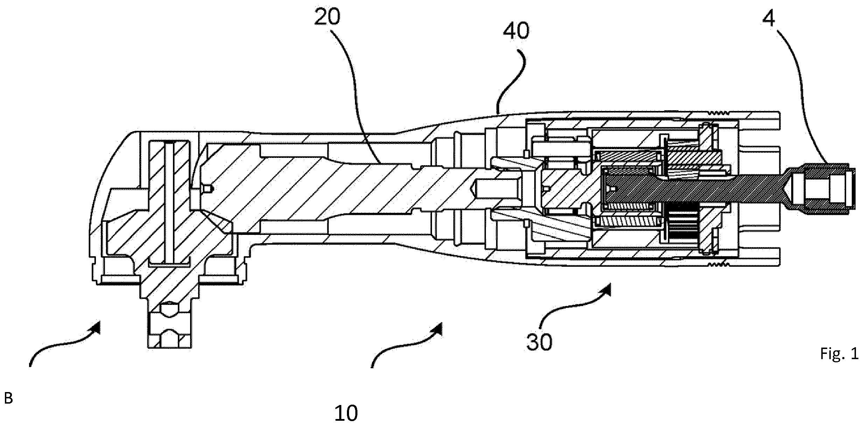

Fig. 1 is a cross sectional view of an exemplary power tool 10 according to one embodiment, in this case a handheld angled battery powered tool 10. The tool comprises a motor (not shown), an output shaft 20 with which the gear unit may be adapted to engage, in the illustrated embodiment an output shaft 20 adapted to be connected to, or form part of, the bevel gear B at the front end of the tool, and a gear unit 30 arranged between the output shaft 20 and a drive shaft, or drive axle connected to said motor. The drive shaft is adapted to engage the axle 4 indicated in fig. 1. Further, a housing 40 encloses the motor and gear unit.

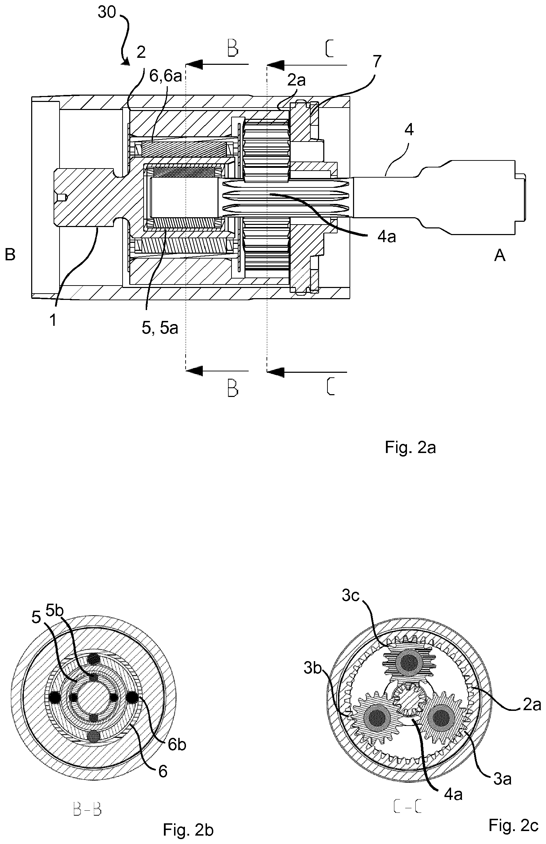

The gear unit 30 will now be described in detail with reference to figure 2, a cross sectional view of an exemplary embodiment of the gear unit 30. The gear unit 30 shown in fig. 2 comprises a gear input shaft 4 adapted to engage the drive shaft (not shown) and hence the motor at a first end A of the input shaft and a gear output shaft 1 adapted to engage the output shaft 20. Further, the gear unit 30 comprises a gear unit subassembly 30a. This subassembly 30a may also be referred to as a planetary gear 30a and comprises a sun gear wheel 4a formed integral with the input shaft 4, more particularly the cogs representing the wheel are formed in the circumferential surface of the shaft 4 as seen in figure 2. Alternatively, the sun wheel 4a may for example be a separate component press- or shrink fitted to the shaft 4. The subassembly further comprises an outer element 2, in the illustrated embodiment a cylindrical outer element 2 comprising an internal ring gear 2a. In the illustrated embodiment three planet gears 3,3',3" of which two may be seen in figure 2, are arranged between the sun gear and the internal ring gear 2a. The gear unit further comprises an outer sleeve 2 which is arranged in the housing 40. A planetary carrier 7, on which the planet gears 3,3',3" are arranged, is fixedly attached to this outer sleeve 2. Hereby, the rotational movement of the planet carrier 7 is fixed with respect to the outer sleeve 2 and hence to the housing 40. The carrier comprises cogs along its circumference and is locked, i.e. fixed to the sleeve 2, by means of these cogs engaging corresponding structures 2b bf the sleeve 2.

The gear unit 30 further comprises a first freewheel clutch mechanism 5 and a second freewheel clutch mechanism 6 each adapted to selectively transfer torque to the gear output shaft 1. In the illustrated embodiment, these mechanisms are roller- or sprag clutches. In the following the term roller clutch will be used, i.e. a first roller clutch 5 and a second roller clutch 6. As such, they each comprise a respective cylindrical element 5;6 and transferring elements such as rollers (or sprags) 5b, 6b arranged there between (see fog 2b) .

With regards to the first roller clutch, this roller clutch is arranged between the input shaft 4 and the gear output shaft 1 by means of an arrangement where an outer surface 5a of the cylindrical element 5 is fitted to the output shaft 1 whereas the transfer elements engage an outer surface of the input shaft 4. The second roller clutch 6 on the other hand is arranged between the outer cylindrical element 2 and the output shaft 1 by means of an arrangement wherein the transferring elements engage an outer surface of the output shaft 1 and wherein said outer cylindrical surface 6a is fitted to the outer element 2, in each case for example by means of press fitting. In order to allow for this arrangement, i.e. for the output shaft 1 to be able to receive the first and/or second roller clutch 5,6 in a particularly advantageous manner, the shaft 1 comprises an end portion 1a having the shape of a hollow cylinder having an open end such that the first roller clutch may be arranged on the inside of the hollow cylinder by means of the outer cylindrical surface 5a engaging an inner surface of the cylinder-shaped end portion and the second freewheel clutch mechanism may be arranged on the outside of the hollow cylinder, in this case by means of the transferring elements of the second clutch 6 engaging an outer surface of the cylinder-shaped end portion .

Further, as may be seen from figure 2a as well as in a perpendicular cross section in fig. 2b, the first and second roller clutch 5,6 are coaxially arranged, and also arranged overlapping in an axial direction. Fig. 2b also show the roller element 5b,6b or sprags 5b,6b, of the respective freewheel mechanisms 5, 6. More particularly, the second freewheel 6 may in the illustrated embodiment be denoted an outer freewheel effectively enclosing the first, or inner, freewheel clutch 5. I.e. in the illustrated embodiment a total axial overlap prevails. The second, or outer roller clutch is hence also larger both in terms of diameter and axial length.

The first roller clutch 5 and at the second roller clutch 6 are arranged to provide a torque transferring connection between the input shaft 4 and the output shaft 1 depending on the rotation of orientation of the motor. This will be described in greater detail in the following as the functionality of the gear unit will be explained.

The functionality of the gear unit and hence the power tool is achieved by the gear unit 30 selectively providing a connection between the drive shaft (connected to the motor) and the output axle, i.e. between the gear input- and output shafts 4,1 , either bypassing- or via the planetary gear mechanism depending on the direction of rotation of the motor and hence the drive axle.

This alternating force flow is in the illustrated embodiment of fig. 2, achieved by means of the first and second freewheel roller clutch 5,6 which allows for the force flow to be redirected depending on the direction of rotation of the motor. More particularly, the output shaft 1 is in fact coupled to the input 4 both by means of the first roller clutch 5 and the second roller clutch 6, but the behavior of the clutches and hence the gear unit is governed by the direction of the motor according to the following.

As the gear input shaft is brought to rotate in a first direction, in this exemplary case a clock wise direction, the sun gear wheel 4a and the input axel 4 rotates along in the same direction. This in turn causes the planet gears 3,3',3" to rotate (in the opposite direction). The next component, the carrier 7, is fixedly arranged with respect to the sleeve 8 but the ring gear 2a of the outer element 2 engages the planet gears and hence the cylindrical outer element 2 as a whole is brought to rotate. The outer element 2 is turn connected to and hence effects a rotation of the cylindrical element 6 of the second roller clutch 6, in this case in a counter clockwise direction given the change of direction of rotation over the planetary gear assembly. The second roller clutch 6 is as mentioned above design not to transfer any torque when rotating in a counter clockwise direction and hence idles and no torque is transferred.

The first roller clutch, instead rotates in the clockwise direction of the input shaft 4 and hence indeed transfers torque when rotating in the clockwise direction. Hereby the rotational movement of the input shaft 4 is directly transferred to the output 2 and a 1:1 gear ratio is provided.

In the opposite case, i.e. if the gear input shafts is brought to rotate in the opposite direction, in this exemplary case a counter clock wise direction, the sun gear wheel and the input axel 4 off course also in this case rotates along, causing the planet gears 3,3',3" and hence the cylindrical outer element 2 as a whole to rotate which in turn effects the cylindrical element of the second roller clutch 6. In this case however, the second roller clutch 6 is brought into rotation in the clock wise direction in which the second roller clutch 6 does transfer torque and hence the rotational movement of the input shaft 4 is in this case transferred to the output 1 via the planetary gear and a gear ratio differing from 1:1 is provided. The first roller clutch on the other hand in this case idles and hence transfers no torque.

In both cases the output shaft 2 rotates in a clockwise direction.

In the illustrated embodiment an exemplary gear ratio of 1:5 is obtained using 9 teeth on the sun gear, 17 on the planet gears and 45 teeth on the ring gear.

While the invention has been illustrated and described in detail in the drawings and foregoing description, such illustration and description are to be considered illustrative or exemplary and not restrictive; the invention is not limited to the disclosed embodiment. The skilled person understands that many modifications, variations and alterations are conceivable within the scope as defined in the appended claims.

Additionally, variations to the disclosed embodiments can be understood and effected by those skilled in the art in practicing the claimed invention, form a study of the drawings, the disclosure and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. Gear unit adapted for use in a handheld power tool comprising a motor, an output shaft and a gear unit (30) arranged between said output shaft and a drive shaft connected to said motor,
wherein said gear unit comprises:
a gear input shaft (4) adapted to be driven by said motor,
a gear output shaft (1) adapted to engage said output shaft,
and a gear unit subassembly comprising:
a sun gear (4a) arranged on and co-rotating with said input shaft (4),
an outer element (2) comprising an internal ring gear (2a),
at least one planet gear (3) arranged between said sun gear and said internal ring gear, and adapted to transfer rotational movement there between, and
a planet carrier (7),
wherein the gear unit further comprises a first freewheel clutch mechanism (5) and a second freewheel clutch mechanism (6), each adapted to selectively transfer torque to said gear output shaft,
wherein said first freewheel clutch mechanism (5) is arranged to selectively provide a first torque transferring connection between said gear input shaft (4) and said gear output shaft (1) bypassing said gear unit subassembly and
wherein said second freewheel clutch mechanism (6) is arranged to selectively provide a second torque transferring connection between said drive shaft and said gear output shaft (1) via said gear unit subassembly,
wherein said first freewheel clutch mechanism (5) provides said torque transferring connection when said gear input shaft (4) rotates in a first direction and wherein said second freewheel clutch mechanism (6) provides said second torque transferring connection when said gear input shaft (4) rotates in a second, opposite direction **characterized in that** the outer element (2) comprises an outer cylindrical surface and
on the inside comprises a first cylindrical portion adapted to receive an outer cylindrical surface on the second freewheel clutch mechanism (6) and a second portion constituting the internal ring gear (2a) cooperating with the at least one planet gear (3).

2. Gear unit according to claim 1, wherein said first freewheel mechanism (5) is arranged to engage said input shaft (4) and said gear output shaft (1).

3. Gear unit according to claim 2, wherein said first freewheel mechanism (5) comprises a cylindrical element (5) having a cylindrical outer surface (5a) and at least one movement transferring element (5b) arranged to engage said cylindrical element (5), wherein said outer cylindrical surface is fitted to said output shaft (1) and wherein said at least one movement transferring element is further adapted to engage an outer surface of said input shaft (4).

4. Gear unit according to any of claims 1-3, wherein said second freewheel mechanism (6) is arranged to engage said outer element (2) and said output shaft (1).

5. Gear unit according to claim 4, wherein said second freewheel mechanism (6) comprises a cylindrical element (6) having a cylindrical outer surface (6a), and at least one movement transferring element (6b) arranged to engage said cylindrical element (6), wherein said outer cylindrical surface (6a) is fitted to said output element (2) and wherein said at least one movement transferring element is further adapted to engage an outer surface of said output shaft (1).

6. Gear unit according to any of the preceding claims, wherein at least one of said first and second freewheel mechanism is a roller clutch.

7. Gear unit according to any of the preceding claims further comprising a housing enclosing at least said motor and said gear unit, and wherein a rotational movement of said planet carrier (7) is fixed with respect to said housing.

8. Gear unit according to claim 7, wherein said gear unit further comprises an outer sleeve, wherein said outer sleeve is fixedly arranged in said housing and wherein a rotational movement of said planet carrier (7) is fixed with respect to said outer sleeve.

9. Gear unit according to any of the preceding claims, wherein said first and second freewheel mechanisms are coaxially arranged.

10. Gear unit according to claim 9, wherein said first and second freewheel mechanisms are arranged such that at least a partial axial overlap prevails between said first and second freewheel mechanisms.

11. Gear unit according to any of the preceding claims, wherein the gear ratio of said gear unit, when said gear input shaft (4) is rotating in said first direction is 1:1.

12. Gear unit according to claim 11, wherein the gear ratio when said gear input shaft (3) is rotating in said second, opposite, direction differs from 1:1.

13. Handheld power tool (10) comprising a motor, an output shaft (20) and a gear unit (30) arranged between said output shaft and a drive shaft connected to said motor, wherein said gear unit (30) is a gear unit according to any of claims 1-12.

14. Handheld power tool according to claim 13, wherein the power tool is a power tool chosen from a group comprising a screw driver, a nut runner, a drill and a grinder.

## Patentansprüche

1. Getriebeeinheit, die angepasst ist zur Verwendung in einem handgeführten kraftbetriebenen Werkzeug, umfassend einen Motor, eine Ausgangswelle und eine Getriebeeinheit (30), die zwischen der Ausgangswelle und einer Antriebswelle, die mit dem Motor verbunden ist, eingerichtet ist,
wobei die Getriebeeinheit umfasst:
eine Getriebeeingangswelle (4), die angepasst ist, um durch den Motor angetrieben zu werden,
eine Getriebeausgangswelle (1), die angepasst ist, um die Ausgangswelle in Eingriff zu nehmen,
und eine Getriebeeinheitsunteranordnung, umfassend:
ein Sonnenrad (4a), das an der Eingangswelle (4) eingerichtet ist und sich mit dieser dreht,
ein äußeres Element (2), umfassend ein internes Hohlrad (2a),
mindestens ein Planetenrad (3), das zwischen dem Sonnenrad und dem internen Hohlrad eingerichtet ist und angepasst ist, um eine Drehbewegung dazwischen zu übertragen, und
einen Planetenträger (7),
wobei die Getriebeeinheit ferner einen ersten Freilaufkupplungsmechanismus (5) und einen zweiten Freilaufkupplungsmechanismus (6), die jeweils angepasst sind, um Drehmoment auf die Getriebeausgangswelle selektiv zu übertragen, umfasst,
wobei der erste Freilaufkupplungsmechanismus (5) eingerichtet ist, um eine erste Drehmomentübertragungsverbindung zwischen der Getriebeeingangswelle (4) und der Getriebeausgangswelle (1), die die Getriebeeinheitsunteranordnung umgeht, selektiv bereitzustellen und
wobei der zweite Freilaufkupplungsmechanismus (6) eingerichtet ist, um eine zweite Drehmomentübertragungsverbindung zwischen der Antriebswelle und der Getriebeausgangswelle (1) über die Getriebeeinheitsunteranordnung selektiv bereitzustellen,
wobei der erste Freilaufkupplungsmechanismus (5) die Drehmomentübertragungsverbindung bereitstellt, wenn die Getriebeeingangswelle (4) sich in einer ersten Richtung dreht und wobei der zweite Freilaufkupplungsmechanismus (6) die zweite Drehmomentübertragungsverbindung bereitstellt, wenn die Getriebeeingangswelle (4) sich in einer zweiten, entgegengesetzten Richtung dreht, **dadurch gekennzeichnet, dass**
das äußere Element (2) eine äußere zylindrische Oberfläche umfasst und an der Innenseite einen ersten zylindrischen Abschnitt, der angepasst ist, um eine äußere zylindrische Oberfläche an dem zweiten Freilaufkupplungsmechanismus (6) aufzunehmen, und einen zweiten Abschnitt umfasst, der das interne Hohlrad (2a), das mit dem mindestens einen Planetenrad (3) zusammenwirkt, ausmacht.

2. Getriebeeinheit nach Anspruch 1, wobei der erste Freilaufmechanismus (5) eingerichtet ist, um die Eingangswelle (4) und die Getriebeausgangswelle (1) in Eingriff zu nehmen.

3. Getriebeeinheit nach Anspruch 2, wobei der erste Freilaufmechanismus (5) ein zylindrisches Element (5), das eine zylindrische äußere Oberfläche (5a) aufweist, und mindestens ein Bewegungsübertragungselement (5b), das eingerichtet ist, um das zylindrische Element (5) in Eingriff zu nehmen, umfasst, wobei die äußere zylindrische Oberfläche an der Ausgangswelle (1) montiert ist und wobei das mindestens eine Bewegungsübertragungselement ferner angepasst ist, um eine äußere Oberfläche der Eingangswelle (4) in Eingriff zu nehmen.

4. Getriebeeinheit nach einem der Ansprüche 1 bis 3, wobei der zweite Freilaufmechanismus (6) eingerichtet ist, um das äußere Element (2) und die Ausgangswelle (1) in Eingriff zu nehmen.

5. Getriebeeinheit nach Anspruch 4, wobei der zweite Freilaufmechanismus (6) ein zylindrisches Element (6), das eine zylindrische äußere Oberfläche (6a) aufweist, und mindestens ein Bewegungsübertragungselement (6b), das eingerichtet ist, um das zylindrische Element (6) in Eingriff zu nehmen, umfasst, wobei die äußere zylindrische Oberfläche (6a) an dem Ausgangselement (2) montiert ist und wobei das mindestens eine Bewegungsübertragungselement ferner angepasst ist, um eine äußere Oberfläche der Ausgangswelle (1) in Eingriff zu nehmen.

6. Getriebeeinheit nach einem der vorstehenden Ansprüche, wobei mindestens einer von dem ersten und dem zweiten Freilaufmechanismus eine Rollenkupplung ist.

7. Getriebeeinheit nach einem der vorstehenden Ansprüche, ferner umfassend ein Gehäuse, das mindestens den Motor und die Getriebeeinheit umschließt, und wobei eine Drehbewegung des Planetenträgers (7) hinsichtlich des Gehäuses starr ist.

8. Getriebeeinheit nach Anspruch 7, wobei die Getriebeeinheit ferner eine äußere Hülse umfasst, wobei die äußere Hülse in dem Gehäuse starr eingerichtet ist und wobei eine Drehbewegung des Planetenträgers (7) hinsichtlich der äußeren Hülse starr ist.

9. Getriebeeinheit nach einem der vorstehenden Ansprüche, wobei der erste und der zweite Freilaufmechanismus koaxial eingerichtet sind.

10. Getriebeeinheit nach Anspruch 9, wobei der erste und der zweite Freilaufmechanismus derart eingerichtet sind, dass mindestens eine teilweise axiale Überlappung zwischen dem ersten und dem zweiten Freilaufmechanismus vorherrscht.

11. Getriebeeinheit nach einem der vorstehenden Ansprüche, wobei das Übersetzungsverhältnis der Getriebeeinheit, wenn die Getriebeeingangswelle (4) sich in die erste Richtung dreht, 1 : 1 beträgt.

12. Getriebeeinheit nach Anspruch 11, wobei das Übersetzungsverhältnis, wenn die Getriebeeingangswelle (3) sich in der zweiten, entgegengesetzten Richtung dreht, von 1 : 1 abweicht.

13. Handgeführtes kraftbetriebenes Werkzeug (10), umfassend einen Motor, eine Ausgangswelle (20) und eine Getriebeeinheit (30), die zwischen der Ausgangswelle und einer Antriebswelle, die mit dem Motor verbunden ist, eingerichtet ist, wobei die Getriebeeinheit (30) eine Getriebeeinheit nach einem der Ansprüche 1 bis 12 ist.

14. Handgeführtes kraftbetriebenes Werkzeug nach Anspruch 13, wobei das kraftbetriebene Werkzeug ein kraftbetriebenes Werkzeug ist, das aus einer Gruppe ausgewählt ist, umfassend einen Schraubendreher, eine Mutternanziehmaschine, einen Bohrer und eine Schleifmaschine.

## Revendications

1. Unité d'engrenages adaptée pour une utilisation dans un outil électrique portatif comprenant un moteur, un arbre de sortie et une unité d'engrenages (30) disposée entre ledit arbre de sortie et un arbre d'entraînement relié audit moteur,
dans laquelle ladite unité d'engrenages comprend :
un arbre d'entrée d'engrenage (4) disposé pour être entraîné par ledit moteur, un arbre de sortie d'engrenage (1) adapté pour entrer en prise avec ledit arbre de sortie, et un sous-ensemble d'unité d'engrenages comprenant :
une roue solaire (4a) disposée sur ledit arbre d'entrée et en co-rotation avec celui-ci (4),
un élément externe (2) comprenant une couronne interne (2a),
au moins un engrenage planétaire (3) disposé entre ladite roue solaire et ladite couronne interne, et adapté pour transférer un mouvement de rotation entre eux, et
un porte-satellites (7),
dans laquelle d'unité d'engrenages comprend en outre un premier mécanisme d'embrayage à roue libre (5) et un second mécanisme d'embrayage à roue libre (6), chacun étant adapté pour transférer sélectivement un couple audit arbre de sortie d'engrenage,
dans laquelle ledit premier mécanisme d'embrayage à roue libre (5) est disposé pour fournir sélectivement une première liaison de transfert de couple entre ledit arbre d'entrée d'engrenage (4) et ledit arbre de sortie d'engrenage (1) contournant ledit sous-ensemble d'unité d'engrenages et
dans laquelle ledit second mécanisme d'embrayage à roue libre (6) est disposé pour fournir sélectivement une seconde liaison de transfert de couple entre ledit arbre d'entraînement et ledit arbre de sortie d'engrenage (1) par l'intermédiaire dudit sous-ensemble d'unité d'engrenages,
dans laquelle ledit premier mécanisme d'embrayage à roue libre (5) fournit ladite liaison de transfert de couple lorsque ledit arbre d'entrée d'engrenage (4)
est en rotation dans une première direction et dans laquelle ledit second mécanisme d'embrayage à roue libre (6) fournit ladite seconde liaison de transfert de couple lorsque ledit arbre d'entrée d'engrenage (4) est en rotation dans une seconde direction opposée **caractérisée en ce que**
l'élément externe (2) comprend une surface cylindrique externe et sur l'intérieur comprend une première partie cylindrique adaptée pour recevoir une surface cylindrique externe sur le second mécanisme d'embrayage à roue libre (6) et une seconde partie constituant la couronne interne (2a) coopérant avec l'au moins un engrenage planétaire (3).

2. Unité d'engrenages selon la revendication 1, dans laquelle ledit premier mécanisme à roue libre (5) est disposé pour entrer en prise avec ledit arbre d'entrée (4) et ledit arbre de sortie d'engrenage (1).

3. Unité d'engrenages selon la revendication 2, dans laquelle ledit premier mécanisme à roue libre (5) comprend un élément cylindrique (5) ayant une surface externe cylindrique (5a) et au moins un élément de transfert de mouvement (5b) disposé pour entrer en prise avec ledit élément cylindrique (5), dans laquelle ladite surface cylindrique externe est montée sur ledit arbre de sortie (1) et dans laquelle ledit au moins un élément de transfert de mouvement est en outre adapté pour entrer en prise avec une surface externe dudit arbre d'entrée (4).

4. Unité d'engrenages selon l'une quelconque des revendications 1 à 3, dans laquelle ledit second mécanisme à roue libre (6) est disposé pour entrer en prise avec ledit élément externe (2) et ledit arbre de sortie (1).

5. Unité d'engrenages selon la revendication 4, dans laquelle ledit second mécanisme à roue libre (6) comprend un élément cylindrique (6) ayant une surface externe cylindrique (6a), et au moins un élément de transfert de mouvement (6b) disposé pour entrer en prise avec ledit élément cylindrique (6), dans laquelle ladite surface cylindrique externe (6a) est montée sur ledit élément de sortie (2) et dans laquelle ledit au moins un élément de transfert de mouvement est en outre adapté pour entrer en prise avec une surface externe dudit arbre de sortie (1).

6. Unité d'engrenages selon l'une quelconque des revendications précédentes, dans laquelle au moins l'un desdits premier et second mécanismes à roue libre est une roue libre à rouleaux.

7. Unité d'engrenages selon l'une quelconque des revendications précédentes, comprenant en outre un boîtier renfermant au moins ledit moteur et ladite unité d'engrenages, et dans laquelle un mouvement de rotation dudit porte-satellites (7) est fixé par rapport audit boîtier.

8. Unité d'engrenages selon la revendication 7, dans laquelle ladite unité d'engrenages comprend en outre un manchon externe, dans laquelle ledit manchon externe est disposé de manière fixe dans ledit boîtier et dans laquelle un mouvement de rotation dudit porte-satellites (7) est fixé par rapport audit manchon externe.

9. Unité d'engrenages selon l'une quelconque des revendications précédentes, dans laquelle lesdits premier et second mécanismes à roue libre sont disposés coaxialement.

10. Unité d'engrenages selon la revendication 9, dans laquelle lesdits premier et second mécanismes à roue libre sont disposés de telle sorte qu'au moins un chevauchement axial partiel prévaut entre lesdits premier et second mécanismes à roue libre.

11. Unité d'engrenages selon l'une quelconque des
revendications précédentes, dans laquelle le rapport d'engrenage de ladite unité d'engrenage, lorsque ledit arbre d'entrée d'engrenage (4) est en rotation dans
ladite première direction est 1:1.

12. Unité d'engrenages selon la revendication 11,
dans laquelle le rapport d'engrenage lorsque ledit
arbre d'entrée d'engrenage (3)
est en rotation dans ladite seconde direction opposée diffère de 1:1.

13. Outil électrique portatif (10) comprenant un moteur, un arbre de sortie (20) et une unité d'engrenages (30) disposée entre ledit arbre de sortie et un arbre d'entraînement relié audit moteur, dans lequel ladite unité d'engrenages (30) est une unité d'engrenages selon l'une quelconque des revendications 1 à 12.

14. Outil électrique portatif selon la revendication 13, dans lequel l'outil électrique est un outil électrique choisi dans un groupe comprenant un tournevis, une boulonneuse, une perceuse et un broyeur.
